# EUROPEAN PATENT SPECIFICATION

(11) **EP 3 088 838 B1**
(45) Date of publication and mention of the grant of the patent: **28.11.2018**
(21) Application number: 16165105.4
(22) Date of filing: 13.04.2016
(51) Int. Cl.: G01B 11/00, B61D 17/04

(54) **METHOD OF MANUFACTURING RAILWAY VEHICLE, MEASUREMENT APPARATUS AND MEASUREMENT METHOD**
VERFAHREN ZUR HERSTELLUNG EINES SCHIENENFAHRZEUGS, MESSVORRICHTUNG UND MESSVERFAHREN
PROCÉDÉ DE FABRICATION D'UN VÉHICULE FERROVIAIRE, PROCÉDÉ ET APPAREIL DE MESURE

(30) Priority: 20.04.2015 JP 2015085578
(43) Date of publication of application: 02.11.2016
(73) Proprietor: Hitachi, Ltd., Tokyo 100-8280 (JP)
(72) Inventor: KASAI, Hiroaki, Tokyo, 100-8280 (JP); OKADA, Norihisa, Tokyo, 100-8280 (JP); TSUTSUMI, Daisuke, Tokyo, 100-8280 (JP); KAWABE, Shinichi, Tokyo, 100-8280 (JP)
(74) Representative: MERH-IP Matias Erny Reichl Hoffmann Patentanwälte PartG mbB

(56) References cited:
- DE-A1-102007 003 253
- US-A1- 2013 293 684
- US-A1- 2014 343 890
- US-B1- 7 307 737
- MAURIZIO GALETTO ET AL: "MScMS-II: an innovative IR-based indoor coordinate measuring system for large-scale metrology applications", THE INTERNATIONAL JOURNAL OF ADVANCED MANUFACTURING TECHNOLOGY, SPRINGER, BERLIN, DE, vol. 52, no. 1 - 4, 25 May 2010 (2010-05-25), pages 291-302, XP019873023, ISSN: 1433-3015, DOI: 10.1007/S00170-010-2717-0

## Description

### BACKGROUND OF THE INVENTION

### Field of the Invention

The present invention relates to a method of manufacturing railway vehicle, and a measurement apparatus and measurement method used for manufacturing the same.

### Description of the Related Art

A railway vehicle is a large structure with a width and height of approximately 3000 mm (3 m) and a length of approximately 20000 mm (20 m) composed of a bogie and a car body mounted on the bogie. In the car body of the railway vehicle, a portion bearing a strength of the car body, excluding seats and other interior equipment, lighting and control equipment, is referred to as a "body structure". A manufacturing step of a car body of a railway vehicle is roughly classified into a can manufacturing step of welding metal materials such as aluminum and stainless steel to form the body structure, and an outfitting step of attaching various components such as interior parts and electrical components to the body structure.

During the outfitting step, deformation caused by the weight of equipments and the like occur, but such deformation is very small, so that the dimension at the time the body structure is completed determines the dimension of the completed railway vehicle. Further, since attaching of components is performed during the outfitting step, the dimension at the time of completion of the body structure must be measured accurately.

Japanese Unexamined Patent Application Publication No. H08-314997 (Patent Literature 1) discloses a background art of the present field of art.

The publication discloses "a coordinate measuring system for multidimensional shape that measures and estimates coordinate values of predetermined positions of a measuring target having a multidimensional shape, the system including a CAD data input part inputting a CAD data created in advance, a CAD graphic display part displaying the entered CAD data, a measuring condition input part teaching and inputting measuring conditions to the displayed CAD graphic, a measuring instruction input part teaching and inputting the measuring instruction and a measuring information which is information related to estimation, a measuring information preparing part preparing the measuring instruction operating a coordinate measuring machine in accordance with the taught measuring instruction and measuring condition, a measuring machine instruction output part outputting data that can be inputted to the measuring machine in accordance with the measuring instruction to the measuring machine, a measured coordinate value input part inputting a measured coordinate value measured by the measuring machine, an estimating part estimating a dimension or shape of the measuring target in accordance with the inputted measured coordinate value and measuring information taught in advance, an estimation result display part automatically relating the measuring information taught in advance and the estimated result and displaying the same as numerical value or graphic on a display, and an estimating result output part outputting the estimated result to an external device using a predetermined format."

Further prior art relating to remote tactile pointers or remote probes is disclosed in US 2013/293684 A1, US 7 307 737 B1, US 2014/343890 A1, XP09873023 and DE 10 2007 003253 A1.

### SUMMARY OF THE INVENTION

Patent Literature 1 discloses a system of instructing measurement and estimating dimension and shape using a coordinate measuring machine. However, the coordinate measuring system of Patent Literature 1 neither discloses nor suggests how a measurement spot is specified, or determining whether the measurement spot is correct or not. Here, the specification of a measurement spot refers to recognizing which part of the target object should be measured.

For example, in a portion where an automatic measuring machine is difficult to install, such as inside a railway vehicle, a three-dimensional measuring machine may be used where a worker (such as an operator) must specify the measurement spots in order to estimate the dimension and shape of the measured target. In such case, a long time may be required to specify the measurement spots, or that erroneous measurement may be performed. Moreover, much time is required to extract the dimension from the measurement coordinates. Even further, immediate confirmation of the measurement results is required, in order to use the results for correction.

The present invention includes a probe having a stylus with a ball that comes into contact with a measurement spot attached at a tip, a three-dimensional measuring machine measuring a coordinate of the ball of the probe, and a processing unit having a data table, wherein the processing unit stores a data related to a reference point provided on the railway vehicle in the data table, and performs mapping of a three-dimensional measured coordinate and a three-dimensional reference coordinate of each measurement, and performs dimension calculation of the railway vehicle, based on a coordinate error between the three-dimensional reference coordinate of the reference point and the three-dimensional measured coordinate obtained by measuring the railway vehicle using the probe and the three-dimensional measuring machine.

The present invention is defined in the appended independent claims.

According to the present invention, even in a case where an operator specifies a measurement spot during dimension measurement of a railway vehicle using a three-dimensional measuring machine when manufacturing a railway vehicle, erroneous measurement can be suppressed, measurement time can be shortened, and measurement results can be confirmed immediately.

### BRIEF DESCRIPTION OF THE DRAWINGS

FIG. 1 is a view of one arrangement example when measuring an inner side of a body structure using a measurement apparatus 1;
FIG. 2 is a view of a detailed structure of a probe 10;
FIG 3 is a view illustrating a relationship between a shape of a measurement target 501 and a tip ball 104;
FIG. 4 is a view illustrating an example of configuration of a control unit 30;
FIG. 5 is a view illustrating an example of configuration of a processing unit 40;
FIG. 6 is a view of items of respective data tables of a reference point information 401, a measurement condition information 402 and a measurement point information 405;
FIG. 7 is a view illustrating one example of an operation flow of measuring a body structure of a vehicle using the measurement apparatus 1;
FIG. 8 is a view of a detailed flow of measurement operation according to embodiment 1;
FIG. 9 is a view illustrating a state where the probe 10 is set in an accuracy confirming jig 60;
FIG. 10 is a view illustrating an example of a state where the probe 10 is set in a measuring machine position confirming jig 70;
FIG. 11 is an explanatory view of a coordinate transformation in a measurement operation flow;
FIG. 12 is a view illustrating one example of an operation flow of coordinate transformation in the measurement operation flow
FIG. 13 is a view illustrating an example of operation flow of a main measurement in a detailed flow of measurement operation according to embodiment 1;
FIG. 14 is a view of one example of a categorization;
FIG. 15 is a view illustrating one example of measurement flow for each category;
FIG. 16 is a view illustrating a specific example of permissible range of measurement of a reference point 800;
FIG. 17 is a view of a specific example of dimension extraction processing;
FIG. 18 is a view of an example of a screen display of measurement data and the like during measurement;
FIG. 19 is a view illustrating an example of a screen display when measurement is completed and during correction;
FIG. 20 is a view illustrating an operation flow of a main measurement according to embodiment 2; and
FIG. 21 is a view illustrating an example of a detailed flow of measurement operation according to embodiment 2.

### DETAILED DESCRIPTION OF THE PREFERRED EMBODIMENTS

Now, a preferred embodiment of the present invention, and embodiments 1 and 2 as specific examples, will be described with reference to the drawings.

An example of a measurement apparatus and a measurement method measuring a dimension of a body structure of a railway vehicle using a three-dimensional measuring machine will be described as an embodiment of the present invention.

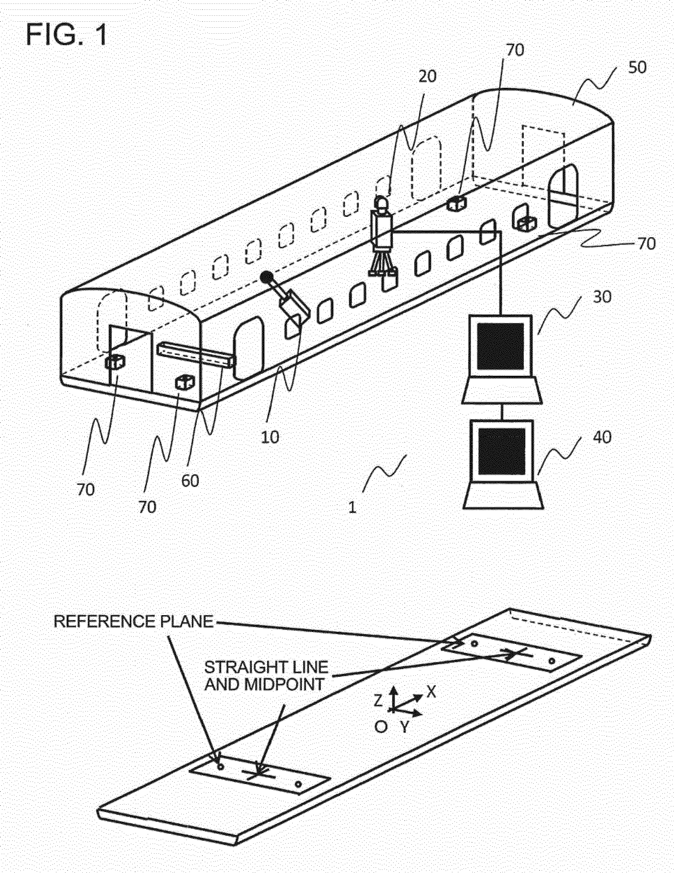

FIG. 1 is a view of one example of an arrangement when an inner side of a body structure is measured using a measurement apparatus 1 according to the present embodiment.

The measurement apparatus 1 includes, at least, a probe 10 configured to contact a measurement spot, a three-dimensional measuring machine 20 measuring a coordinate of a ball disposed at a tip of a stylus equipped in a probe, a control unit 30, and a processing unit 40.

The three-dimensional measuring machine 20 is fixed to an inner side of a body structure 50 as measurement target, using a tripod, a fixing tool and so on. The three-dimensional measuring machine 20 has a limited measurement range determined in accordance with the distance from the main body. In general, the area close to the main body of the three-dimensional measuring machine 20 has a higher measurement accuracy within the measurement range. The three-dimensional measuring machine 20 can be located at any position within the body structure within the allowable measurement range. However, the measurement accuracy can be improved by disposing the measuring machine 20 close to the center of the body structure 50, since all measurement spots can be used as a range close to the three-dimensional measuring machine 20 within the measurement range.

However, if it is not possible to measure all measurements spots by arranging the three-dimensional measuring machine 20 at one location, it is necessary to either move the three-dimensional measuring machine 20 or use multiple three-dimensional measuring machines 20. In that case, the whole measurement range can be measured by integrating the coordinate systems before and after movement of the measuring machine or the plurality of three-dimensional measuring machines 20.

The accuracy confirming jig 60 and the measuring machine position confirming jig 70 are arranged when performing measurement using the measurement apparatus 1.

As for the dimension of the body structure 50, window openings on the sides, door openings of entrances, width and height dimensions within a cross-sectional plane perpendicular to a longitudinal direction, a longitudinal length of the body structure and so on are measured.

In a present embodiment, a portion of the body structure 50 called a body bolster to which a bogie of the body structure 50 is mounted is set as a reference plane with respect to a coordinate system O of the body structure 50. In the following description, a center point in a longitudinal direction and a width direction is referred to as an origin, a longitudinal direction is referred to as X, a width direction is referred to as Y, and a height direction is referred to as Z within the reference plane.

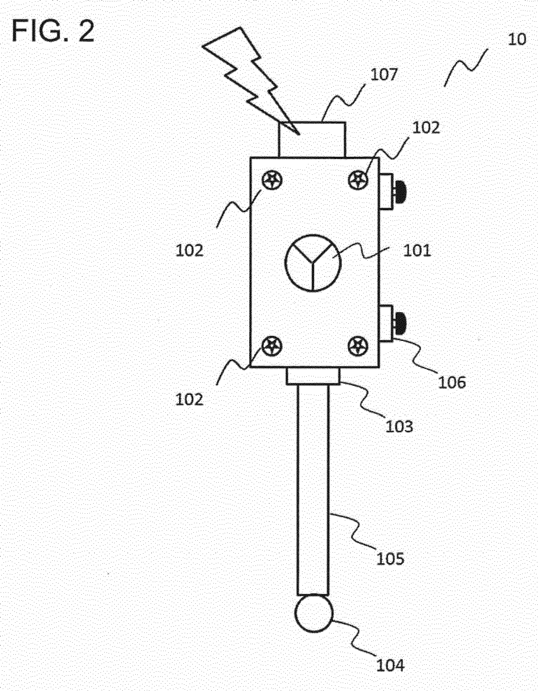

FIG. 2 is a view illustrating a detailed structure of the probe 10.

The probe 10 includes a laser regular reflection unit 101 that reflects laser, three or more LEDs 102 disposed so that the three-dimensional measuring machine 20 can recognize the orientation of the probe 10, a stylus 105 that can be attached to and removed from an adaptor unit 103, a ball (hereinafter referred to as "tip ball") 104 attached to a tip of the stylus 105, a measurement button 106 determining a recording timing, and a transmission means 107 transmitting signals from the measurement button 106 to the control unit 30.

The three-dimensional measuring machine 20 measures a position (coordinate within a space) of the laser regular reflection unit 101 of the probe 10 by a laser attached to the three-dimensional measuring machine 20. During the measurement, the three-dimensional measuring machine 20 acquires a positional relationship of the LEDs 102 of the probe 10 using the attached camera, estimates the orientation of the probe 10, and based thereon, records a center coordinate of the tip ball 104 of the stylus 105.

Further, the position and orientation can be computed based on the arrangement of the LEDs 102, without using the position measurement of the laser regular reflection unit 101 using laser. Further, the measurement button 106 and the transmission means 107 can be prepared separately without being integrated with the probe 10.

The body structure 50 has a shaded portion that cannot be covered by the three-dimensional measuring machine 20, such as behind poles surrounding doors. Therefore, in order to reduce the number of movement of the three-dimensional measuring machine 20, the stylus 105 should preferably be longer than the shaded portion. On the other hand, if the stylus 105 becomes too long, the measurement error of measured coordinates caused by measurement orientation error of the probe 10 in the three-dimensional measuring machine 20 will be increased, so that the stylus 105 should preferably be short. Actually, when measuring the body structure 50, the length of the stylus 105 should preferably be approximately 100 to 1000 mm (10 cm to 1 m).

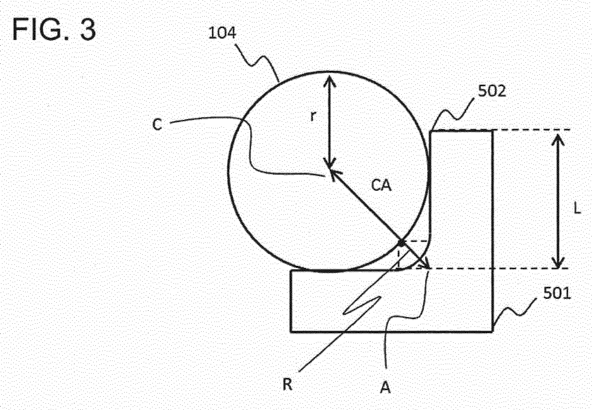

A radius r of the tip ball 104 of the stylus 105 is determined by a shape of the measurement target. FIG. 3 is a view illustrating an example of relationship between the shape of a measurement target 501 and the tip ball 104. It is assumed that the measurement target 501 has a radius R. If radius r of the tip ball 104 is greater than radius R of the measurement target 501, the measurement target 501 and the tip ball 104 contact one another at two points, so that the position of the target within the sheet surface is determined uniquely. On the other hand, if the radius r of the tip ball 104 is smaller than the radius R of the measurement target 501, the measurement target 501 and the tip ball 104 only contact each other at one point, so that the position of the target within the sheet surface will not be determined uniquely, and erroneous measurement occurs.

However, if the radius r of the tip ball 104 is increased, for example, to a size greater than dimension L illustrated in FIG. 3, an edge 502 of the measurement target object and the tip ball 104 contact each other at one point and another point. Therefore, erroneous measurement by the edge 502 occurs. Such erroneous measurement is caused, for example, by deviation of measurement position due to chamfered edges or the dimension L being shorter than a specified value.

If a distance CA between a center C of the tip ball 104 and a point A of the measurement target 501 is long, the tilting of the measurement target 501, that is, the influence of rotation of the target within the sheet surface to the center position C, becomes great. Therefore, during evaluation of the coordinate errors in the lateral and longitudinal directions of the sheet surface, the effect of the tilt can no longer be ignored. Therefore, it is preferable that the radius r of the tip ball 104 is greater than the radius R of the measurement target 501, and smaller than the dimension L of the measurement target 501.

During internal measurement of the body structure 50, in order to measure a portion with a two-point contact, as illustrated in FIG. 3, the radius r of the tip ball 104 should preferably be approximately 0.5 to 50 mm. In order to measure a position of lines or points written through marking and the like to a target object, the radius r of the tip ball 104 should preferably be equal to or smaller than 0.5 mm. As for the measurement spot, it is preferable that the measurement target and the tip ball 104 of the stylus 105 contact each other at two points rather than one point, and more preferably, at three points rather than two points.

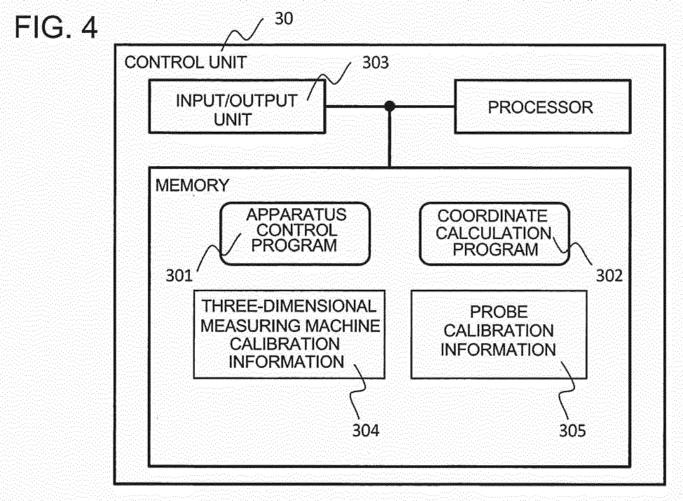

FIG. 4 is a view illustrating a configuration of the control unit 30.

The control unit 30 includes, at least, a processor, an input/output unit 303 and a memory. The memory stores, at least, an apparatus control program 301 and a coordinate calculation program 302 calculating a center coordinate of the tip ball 104 of the probe 10, together with a three-dimensional measuring machine calibration information 304 and a probe calibration information 305.

The coordinate calculation program 302 acquires a measurement value of the center coordinate of the laser regular reflection unit 101 and a measurement value of arrangement position of the plurality of LEDs 102 via the input/output unit 303, and based on the acquired data, the three-dimensional measuring machine calibration information 304 and the probe calibration information 305, computes the center coordinate of the tip ball 104 of the probe 10.

When the control unit 30 receives a signal output by pushing the measurement button 106 of the probe 10 via the input/output unit 303, it calculates the center coordinate of the tip ball 104 of the probe 10 via the coordinate calculation program 302, and records the coordinate. As for recording of data, 300 points are acquired at a rate of 1000 times per second, for example. At this time, if a standard deviation of variation of the center position being acquired is equal to or greater than 0.25 mm, for example, it is possible to provide a filtering function to not have the measurement result recorded. This filtering function prevents acquisition of measurement data that includes errors caused by the vibration of the body structure 50 or the three-dimensional measuring machine 20, or by the tip of the probe 10 not being in contact with the body structure 50 and the center coordinate of the tip ball 104 of the probe 10 being instable.

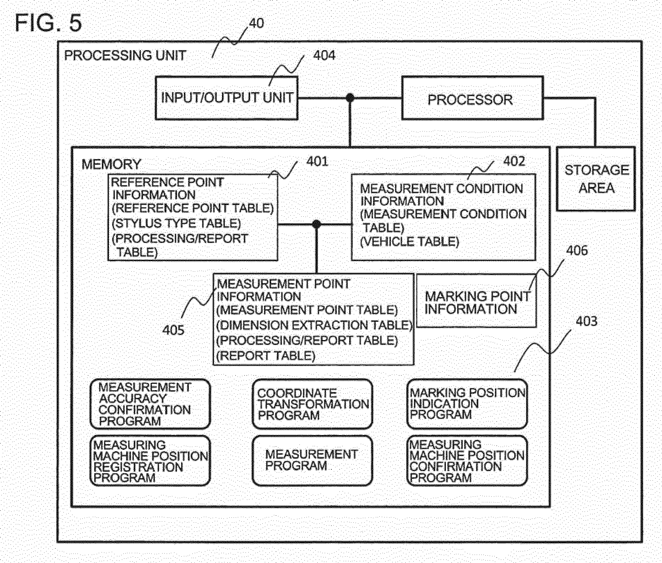

FIG. 5 is an explanatory view of a configuration of the processing unit 40.

The processing unit 40 includes, at least, a processor, an input/output unit 404, a memory and a storage area. The memory includes, at least, a reference point information 401 including coordinate information of all portions being measured, a measurement condition information 402 including the number of all measurement points and number of measurement categories, a measurement point information 405 related to measurement points, a marking point information 406 related to marking, and a plurality of programs 403 for operating the measurement apparatus 1. Programs being stored include, for example, a coordinate transformation program, a measurement program, a measurement accuracy confirmation program, a measuring machine position confirmation program, a measuring machine position registration program and a marking position indication program. These programs are executed by the processor according to the contents of processing.

The processing unit 40 receives a measurement coordinate (center coordinate of the tip ball 104 of the probe 10) through the input/output unit 404 from the control unit 30, each time the measurement button 106 of the probe 10 is pushed. The measurement coordinate functions to generate the measurement point information 405 from the reference point information 401 and the measurement condition information 402. Further, the marking point information 406 is transmitted from the processing unit 40 via the input/output unit 404 to the control unit 30.

The control unit 30 and the processing unit 40 can adopt an integral configuration, and further, it can be installed integrally in the three-dimensional measuring machine 20. The input/output units 303 and 404 included in the control unit 30 and the processing unit 40 can each be divided into an input unit and an output unit. Further, a multiple number of apparatus can be used, the functions can be switched, or the functions can be divided.

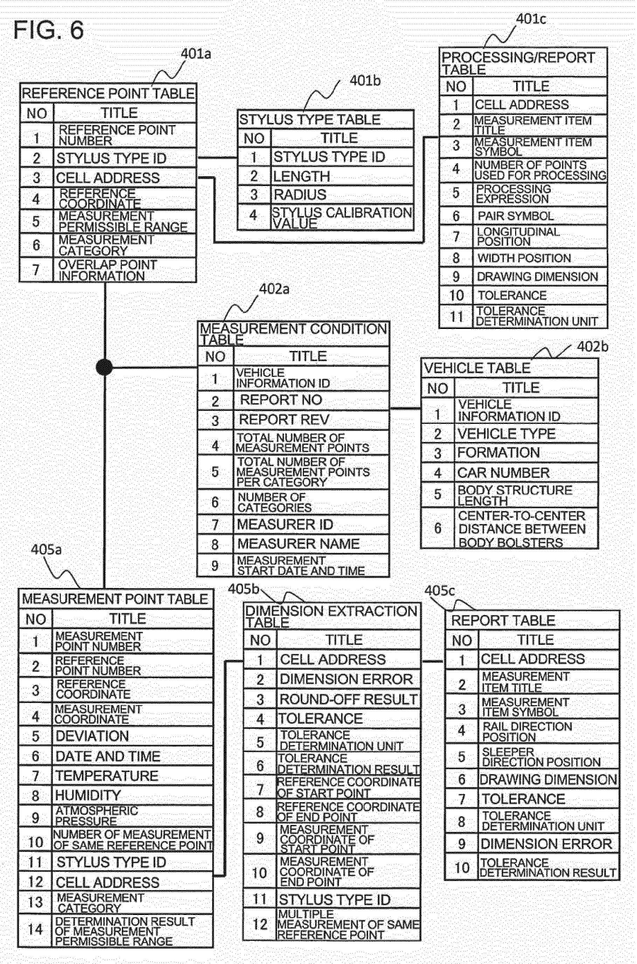

FIG. 6 is a view illustrating an example of the reference point information 401, the measurement condition information 402 and the measurement point information 405 stored in the memory of the processing unit 40, data items of the various data tables included in the respective information, and the connection (relationship) of the various data tables.

The reference point information 401 is composed of a reference point table 401a, a stylus type table 401b and a processing/report table 401c. The reference point table 401a is a table related to a reference point including a cell address and the like indicating a position where the dimension of the report is entered, for example. The stylus type table 401b is a table including the type, the length and the radius and the like of the stylus. The processing/report table 401c is a table containing mathematical expression and pair symbols indicating the points forming pairs among the reference points, a longitudinal position and width direction (sleeper direction) position for specifying the measurement spot, and so on.

The measurement condition information 402 is composed of a measurement condition table 402a and a vehicle table 402b. The measurement condition table 402a is a table including a vehicle information, a total number of measurement points, measurer information, and so on. The vehicle table 402b is a table storing a vehicle information, a body structure length, a center-to-center distance between body bolsters, and so on.

The measurement point information 405 is composed of a measurement point table 405a, a dimension extraction table 405b and a report table 405c. The measurement point table 405a is a table including, for example, a measurement coordinate of a measurement point corresponding to a reference point, a deviation between the reference coordinate and the measurement coordinate, measured date and time, temperature, humidity, atmospheric pressure, and cell address. The dimension extraction table 405b is a table having the cell address as the key, and including a dimension error at the time of extraction of dimension from the measurement point table 405a. The report table 405c is a table having the cell address as the key, and including measurement items, and items required in the report extracted from the dimension extraction table 405b.

A reference point refers to a planned position of the measurement spot. A reference coordinate is a center coordinate of the tip ball 104 in the coordinate system O of the body structure 50 when a ball having the same radius as the tip ball 104 of the probe 10 comes into contact with the reference point in a three-dimensional CAD. It can also be obtained by having a circle contact the target in a two-dimensional CAD. Furthermore, it can be obtained from design information, without using a CAD.

Next, a measurement permissible range is a space surrounding the reference coordinate. In the measurement apparatus 1 according to the present invention, a measurement permissible range set based on the shape of the railway vehicle and the like is stored as information in the reference point table 401a. If a measurement within the permissible range is obtained, the measurement result is adopted by determining that a correct position has been measured, and the measurement result (measurement coordinate) is mapped with the reference coordinate. If a point outside the permissible range is measured, it is determined that an erroneous position has been measured, and the measurement result is not adopted.

Further, if multiple reference points interfere with one another by having the measurement permissible range overlapped, or if the measurement permissible range is not set, the distance between the reference coordinate and the measurement coordinate is calculated, and mapping is performed with a close reference coordinate.

By mapping the measurement coordinate and the reference coordinate, the dimension can be computed automatically and immediately through application of a mathematical expression stored in advance in the processing/report table 401c. Thus, the measurement result can be immediately confirmed by performing mapping and dimension calculation automatically for each measurement.

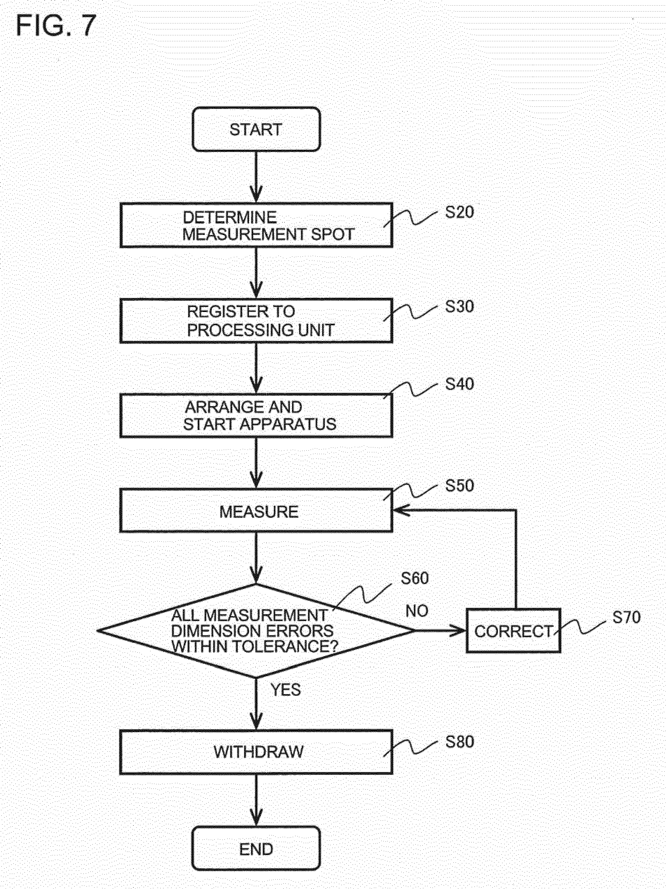

FIG. 7 is a view illustrating one example of an operation flow of measuring a body structure of a vehicle using the measurement apparatus 1, as a previous process of manufacturing a railway vehicle.

An operator (hereinafter, a person related to measurement is collectively referred to as "operator") determines a measurement spot based on design information (step S20), and stores the reference point information 401, the measurement condition information 402 and the marking point information 406 in the processing unit 40 (that is, in the reference point table 401a, the measurement condition table 402a and the marking point information 406) (step S30).

Next, the operator arranges the measurement apparatus 1 as illustrated in FIG. 1, and starts the apparatus (step S40).

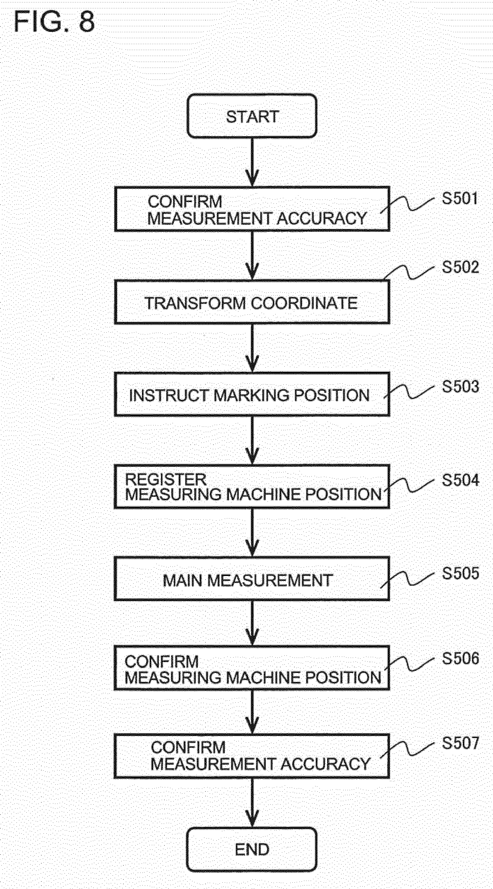

Next, the operator performs measurement (step S50). The details of the measurement operation (step) will be described later with reference to FIG. 8.

The operator determines whether all the measurement dimension errors are within a tolerance or not, based on the output measurement result that has been output (step S60). If the error of the measurement dimension exceeds the tolerance (No), the operator corrects the shape of the body structure, for example, by heating and cooling the body structure (step S70), and performs measurement again (step S50). If the measurement dimension errors are all within a tolerance (Yes), the operator ends the measurement, withdraws the measurement apparatus 1 (step S80), and ends the process.

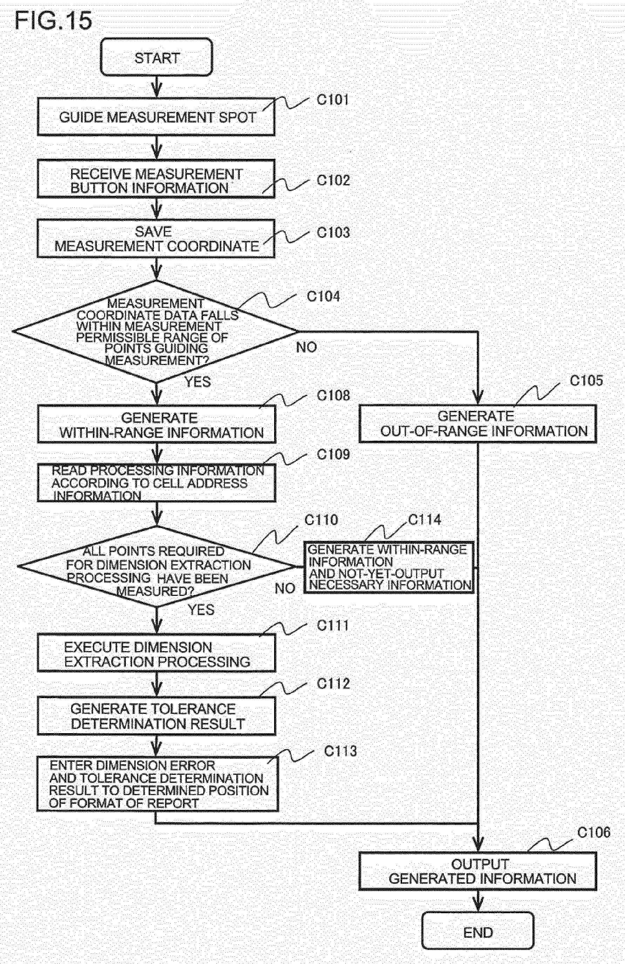

We will complement on the re-measurement performed through correction. As will be described in detail later in the description of FIG. 15, in the measurement of step S50, the operator can immediately confirm the output measurement result including the result of the dimension calculation described earlier, and can immediately determine whether all the errors of measurement dimension are within a tolerance. Therefore, the correction of step S70 can be performed in midway of executing the measurement of step S50, and the measurement of step S50 can be performed again after correction is completed.

When transiting to a step of manufacturing a railway vehicle in succession to an operation (measurement step) of measuring the body structure of the vehicle illustrated in FIG. 7, it is necessary to determine the manufacture conditions of the railway vehicle. At that time, whether to change the manufacturing conditions of the railway vehicle in accordance with the output measurement result including the result of dimension calculation described earlier is determined. If change is required based on this determination, the manufacture conditions are changed, and during the manufacturing step of the railway vehicle, the railway vehicle is manufactured based on the changed manufacture conditions. Thereby, an accurate measurement result of the body structure obtained by the measurement step can be speedily reflected in the manufacture condition of the railway vehicle.

### <First Embodiment>

FIG. 8 is a view illustrating a detailed flow of measurement operation according to a first embodiment, in a measurement operation of step S50 in the operation flow of FIG. 7. As described below, the operator performs measurement operation based on instructions from the processing unit 40 using the measurement apparatus 1.

Further, in the description of the operation flow illustrated below based on FIG. 8, the program described in the operation (processing) steps are the programs stored in the memory 403 of the processing unit 40 illustrated in FIG. 5, and executed by the processor of the processing unit 40.

During measurement operation, the operator confirms the measurement accuracy by the measurement accuracy confirmation program on whether the accuracy of the three-dimensional measuring machine 20 satisfies a necessary accuracy, before performing the main measurement (step S505) for acquiring data (step S501).

Next, the operator performs measurement for transforming the coordinate system of the measurement data performed by a measuring machine 20 to a coordinate system O of the body structure 50, and generates data for coordinate transformation by the coordinate transformation program (step S502).

Thereafter, the operator manipulates the three-dimensional measuring machine 20 to instruct the measurement spot included in the marking point information 406. The three-dimensional measuring machine 20 uses the marking position indication program to irradiate the installed laser to pass the three-dimensional coordinate in the coordinate system O of the body structure 50, and instructs the measurement spot to the measurer holding the probe 0 (step S503).

Next, the operator measures the measuring machine position confirming jig 70, and stores an initial position of the three-dimensional measuring machine 20 using the measuring machine position registration program (step S504).

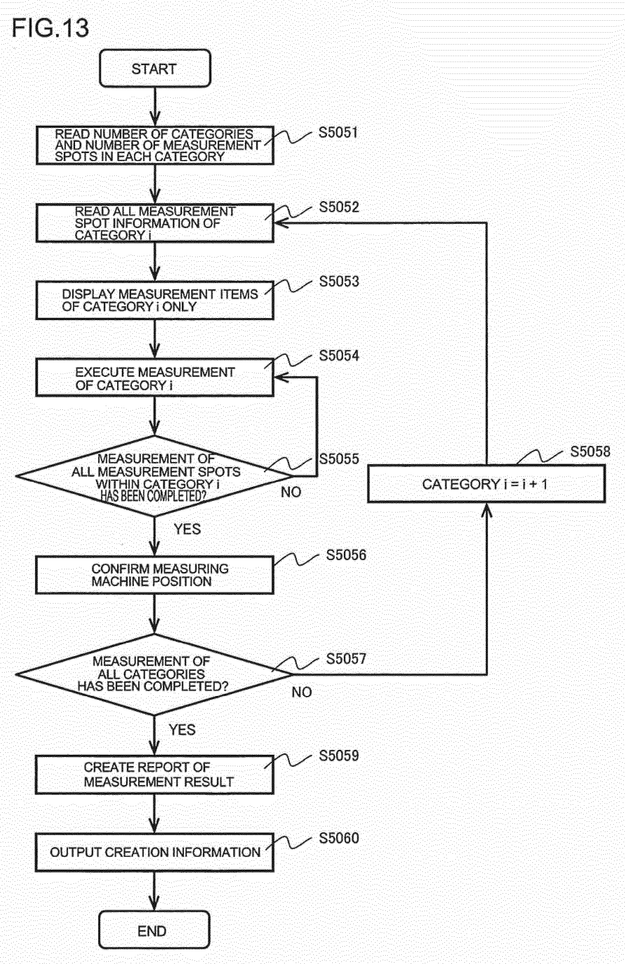

Thereafter, the operator measures the measurement spot of the reference point information 401 registered in advance as main measurement (step S505). The operation (steps) of the main measurement will be described later with reference to FIG. 13.

After the main measurement (step S505) is completed, the operator measures the measuring machine position confirming jig 70 measured in step S504 again, and confirms using the measuring machine position confirmation program that the measuring machine position has not changed (step S506).

Finally, the operator confirms the measurement accuracy again using the measurement accuracy confirmation program (step S507), and ends the measurement operation.

Further, in step S503, a laser irradiation means can be prepared independently. In that case, the separately prepared laser irradiation means must be matched with the coordinate system O of the body structure 50. The main measurement (step S505) and the marking instruction (step S503) can be performed simultaneously, by preparing an independent means,.

As described above, the first embodiment guarantees the coordinate measurement accuracy of the measurement point by confirming the measurement accuracy (steps S501 and S507) before and after the main measurement (step S505) as the detailed flow of the measurement operation, and in addition, guarantees that the measurement data is in the same coordinate system by confirming (steps S504 and S506) that the measuring machine position has not changed immediately before and after the main measurement (step S505).

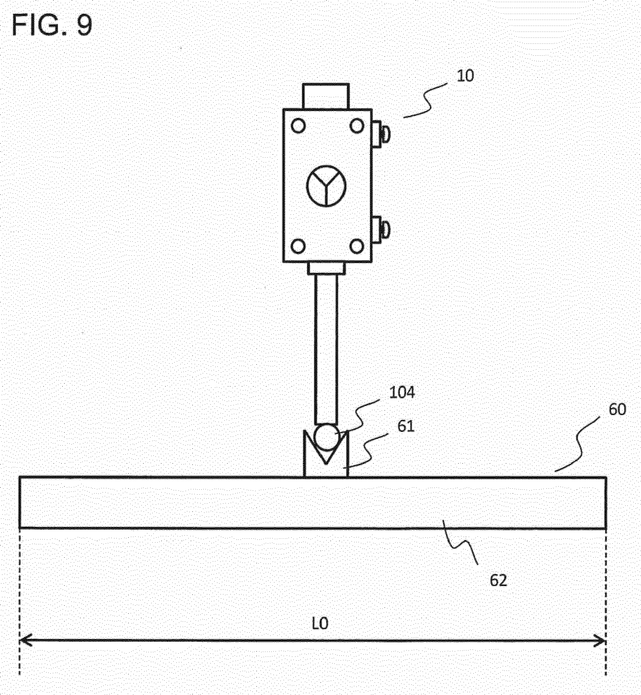

The confirmation operation of measurement accuracy performed in steps S501 and S507 will be described with reference to FIG. 9. The accuracy confirming jig 60 is used for the confirmation operation of measurement accuracy. FIG. 9 is a view of an example of a state in which the probe 10 is set in the accuracy confirming jig 60. In order to confirm the measurement accuracy, it is possible to adopt a method where the probe 10 is moved in a state where the center of the tip ball 104 of the probe 10 is fixed to a fixing portion 61 of the accuracy confirming jig 60 and dispersion of recorded measurement points is evaluated, or a method where a known length L0 of a reference bar portion 62 of the accuracy confirming jig 60 is measured for comparison. The criterion of accuracy confirmation is set smaller than the required accuracy.

Now, the length L0 of a reference bar portion 62 of the accuracy confirming jig 60 should preferably have approximately a same length as the measurement target, so as to evaluate the measurement accuracy within the whole area used for measurement, in the measurement range of the three-dimensional measuring machine 20. However, if the length is too long, the portability of the accuracy confirming jig 60 is deteriorated, and handling becomes difficult. Considering that the size of the body structure 50 as the measurement target is approximately 3 m × 3 m × 25 m, the length L0 should be set to approximately 1/10 the maximum length of the body structure 50, or to 1 m through 5 m, for example.

The confirmation of measurement accuracy mentioned above should preferably be performed at multiple locations, but if the number becomes excessive, confirmation of measurement accuracy will take up too much time, so that the confirmation should be performed at longitudinal ends of the vehicle of the body structure 50, for example. When multiple types of styluses 105 are used, all types of styluses 105 should be used for accuracy verification performed at least at one portion.

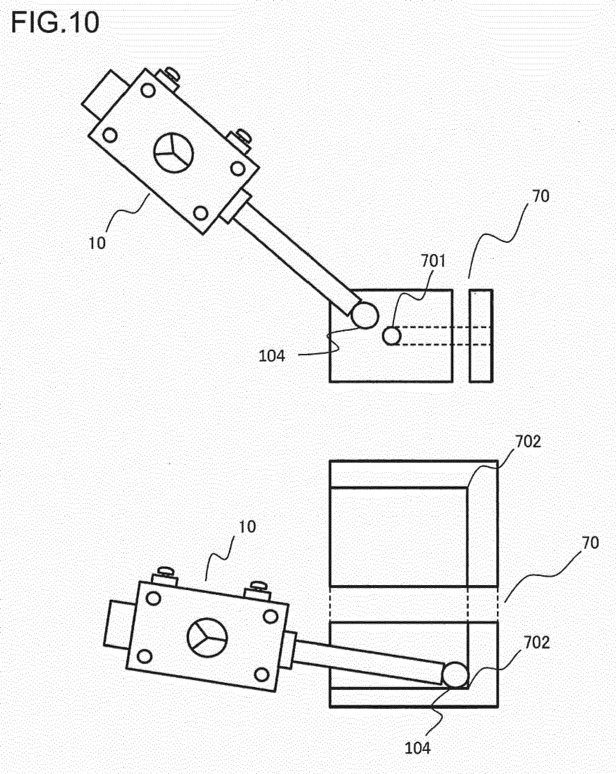

Next, a confirmation operation of the measuring machine position performed in step S506 will be described with reference to FIG. 10. In the confirmation operation of the measuring machine position, one or more measuring machine position confirming jigs 70 are arranged. Then, the measuring machine position confirming jig 70 is fixed to the body structure using a vice, an adhesive or a tape so that the measuring machine position confirming jig 70 will not move with respect to the body structure 50.

FIG. 10 is a view showing an example of a state in which the probe 10 is set to the measuring machine position confirming jig 70. The structure enables the center position of the tip ball 104 of the probe 10 to be determined uniquely by disposing a hole 701 smaller than the tip ball 104 of the probe 10 or an L-shaped corner 702 to the measuring machine position confirming jig 70. Thereby, the position of the measuring machine position confirming jig 70 can be measured with high repeatability, so that the confirmation of position of the three-dimensional measuring machine 20 performed in step S506 can be performed with high accuracy.

The cause of movement of the three-dimensional measuring machine 20 can be, for example, an operator touching the three-dimensional measuring machine 20. However, if the criteria is set too strict, the three-dimensional measuring machine 20 may be determined to have moved, even by the influence of the body structure 50 expanded or contracted by temperature or the influence of measurement repeatability of the three-dimensional measuring machine 20. Therefore, the criteria should preferably be approximately 1 mm.

Whether the three-dimensional measuring machine 20 has moved or whether the measuring machine position confirming jig 70 has moved can be determined by arranging two or more measuring machine position confirming jigs 70. Further, by arranging three or more measuring machine position confirming jigs 70, a transformation matrix for matching the coordinate systems before and after movement when the three-dimensional measuring machine 20 has moved can be obtained. It is not preferable to have too many measuring machine position confirming jigs 70 since the operation time for measuring the measuring machine position confirming jig 70 is elongated, but from the viewpoint of safety related to one of the measuring machine position confirming jigs 70 being moved and hindering the operation, the number of jigs being arranged should preferably be approximately four.

On the other hand, the characteristics of the body structure 50 can be utilized, without using the measuring machine position confirming jig 70. The characteristics of the body structure 50 include, for example, holes for mounting interior parts or corner portions of a hexahedron. If it can be guaranteed that the fixture position of the three-dimensional measuring machine 20 will not be changed, the steps of registering and confirmation (steps S504 and S506) of the position of the three-dimensional measuring machine 20 can be omitted.

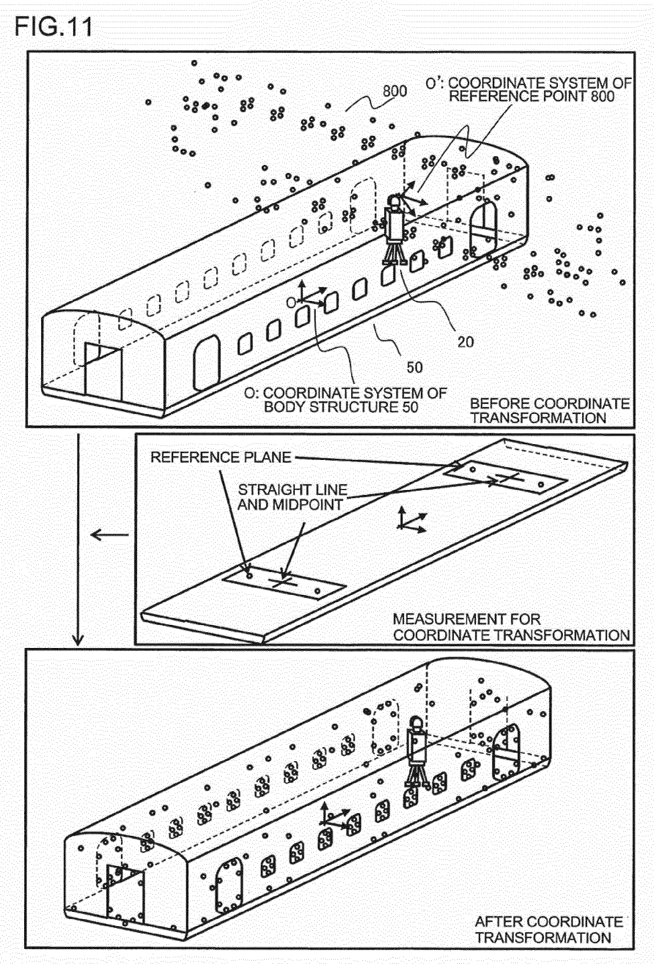

FIG. 11 is a view illustrating a coordinate transformation in step S502 of the measurement operation flow of FIG. 8. It is difficult to instruct the installation position of the three-dimensional measuring machine 20 with respect to the body structure 50, and strictly match the setting position of the three-dimensional measuring machine 20 in accordance with the instruction. Therefore, in a state before performing coordinate transformation of installing the three-dimensional measuring machine 20, generally, a coordinate system O' of a reference point 800 registered in advance in the measurement apparatus 1 and the coordinate system O of the body structure 50 do not correspond. Therefore, the coordinate data of the reference point in the coordinate system O' of the three-dimensional measuring machine 20 can be transformed to the coordinate system O of the body structure 50, by performing the coordinate transformation of step S502.

Further, the confirmation of the measuring machine position described earlier can be judged by performing coordinate transformation of step S502 each time without using the measuring machine position confirming jig 70, and performing determination based on an amount of movement of an arbitrary measurement point.

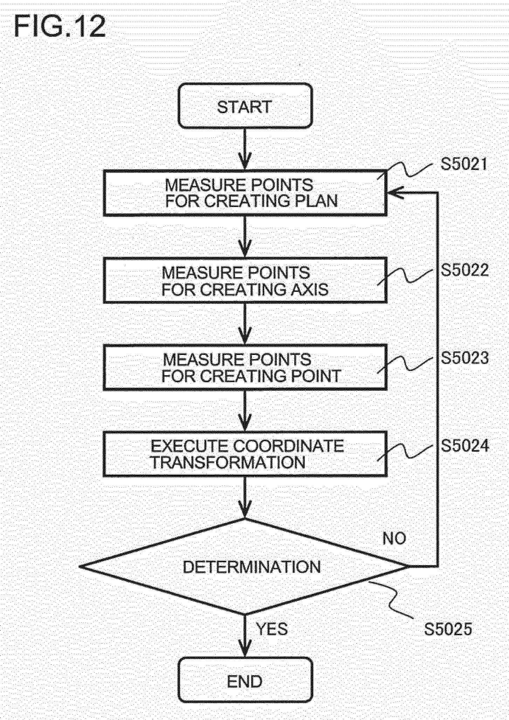

FIG. 12 is a view illustrating one example of an operation flow of coordinate transformation in step S502 of the measurement operation flow of FIG. 8.

In order to compute the coordinate system O of the body structure 50, the operator sequentially measures points for creating a plan (step S5021), measures points for creating an axis (step S5022), and measures points for creating a point (step S5023). Thereafter, the operator executes coordinate transformation via the coordinate transformation program (step S5024).

As long as the coordinate system O of the body structure 50 can be computed, the measurement target is not restricted to a plane, an axis and a point, but can be a plane, a plane and a plane, or can be an axis, an axis and an axis.

It is also possible to provide a determination value such as a flatness, a linearity or a point-to-point distance and perform determination on whether a plane, an axis and a point has been measured correctly (step S5025). If the determination result is negative, the measurement is to be performed again, but if the determination result is positive, the process is ended.

It is possible to correspond to the determination by either providing a determination function to the coordinate transformation program, or preparing an independent determination program. It is possible to correspond to the determination value by adopting a fixed setting, or by variably setting the determination value either manually or by selecting from a table and the like for each measurement operation.

FIG. 13 is a view illustrating an operation flow of the main measurement of step S505 in the detailed flow of the measurement operation according to the first embodiment of FIG. 8. Here, the term "category" refers to a group in which a plurality of reference points are gathered, and measurement is performed for each category. In order to prevent overlap of measurement permissible ranges of a plurality of measurement spots, that is, prevent the same coordinate of a space from being included, the points can be divided into different measurement categories by utilizing categories. Thereby, the specification of measurement spots can be simplified. Further, the measurement sequence among categories can be regulated. The measurement sequence within a category can either be arbitrarily determined or designated.

The measurement program reads the number of categories and the number of measurements spots in each category from the reference point table 401a (step S5051).

Next, the measurement program reads the reference point information of each category stored in advance in the processing unit 40 from the reference point table 401a (step S5052), and displays only the measurement items of the category being measured on an output unit of the input/output unit 404 (step S5053).

Thereafter, the operator performs measurement of each category based on the contents (measurement items) displayed in the previous step S5053 (step S5054).

The measurement program checks the measurement data acquired sequentially from the measurement of each category in step S5054, and determines whether measurement of all measurement spots within the same category has been completed (steps S5055).

If all the measurement within the same category has been completed (Yes), the operator utilizes the measuring machine position confirmation program to confirm the position of the three-dimensional measuring machine 20 (step S5056). If all measurements are not yet completed (No), the operator returns to step S5054 and continues measurement.

After confirming the position of the three-dimensional measuring machine 20, the operator determines whether the measurement of all categories have been completed by the measurement program (step S5057). If measurement of all categories has not been completed (No), a next category is designated by the measurement program (step S5058), and the operator returns to step S5052 and executes measurement again. If measurement of all categories has been completed (Yes), the measurement program creates a report of the measurement result (step S5059), outputs a creation information (step S5060), and ends the process.

Now, in confirming the position of the three-dimensional measuring machine 20 (step S5056), if it is determined that the three-dimensional measuring machine 20 has moved (the determination is not illustrated), the following measures can be taken.

One of the measures is to erase all measurement data, and re-execute the process from coordinate transformation (step S502 of FIG. 8), and another measure is to leave the measurement data to the previous category, and re-execute the operation again from coordinate transformation (step S502 of FIG. 8). In the latter methods, the delay of operation time can be reduced by leaving the measurement data to the previous category.

Another possible measure performs coordinate transformation of the coordinate system by measuring the measuring machine position confirming jig 70 again. If the number of measuring points is small, the operation time can be shortened by measuring the measuring machine position confirming jig 70 again, compared to creating the coordinate system again.

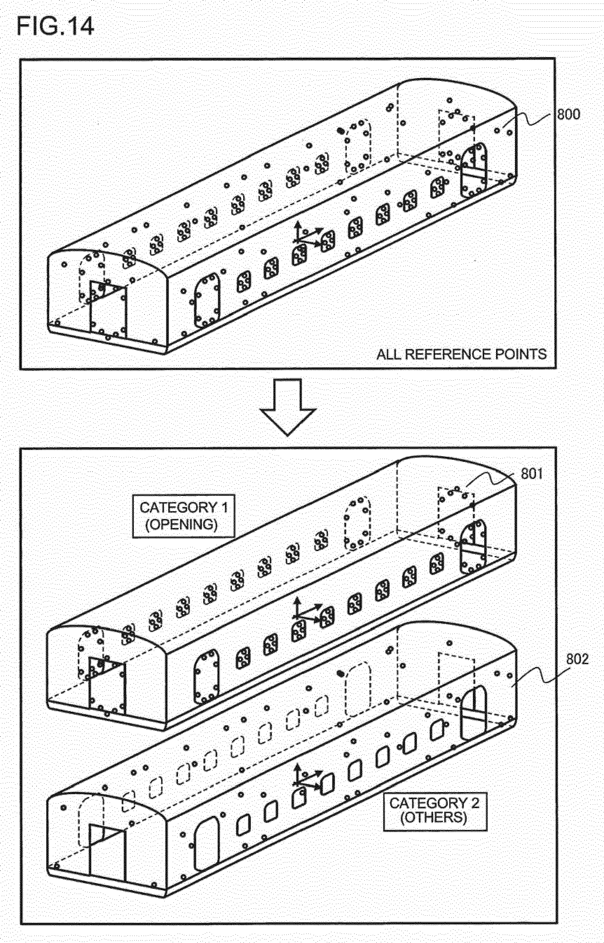

FIG. 14 is a view illustrating one example of categorization.

All the reference points 800 are divided into a category 1 composed of reference points 801 for measuring openings such as window openings and door openings, as illustrated in FIG. 14, and a category 2 composed of other reference points 802, for example. Thus, the specification of a measurement spot can be simplified by categorizing the points where measurement permissible ranges interfere among a plurality of measurement spots, or by categorizing the points whose measurement spots are close into different categories.

As according to one categorization example illustrated in FIG. 14, if the categories are divided per characteristic property of a specific portion, the categories are determined for each characteristic property of the measurement spot, so that the pattern of measurement spots can be easily recognized. Thus, the operation time for searching measurement spots can be reduced compared to when measurement is performed in order from the front side toward the rear side of the vehicle for all measurement points, for example.

Further, as illustrated in FIG. 13, in determining whether the position of the three-dimensional measuring machine 20 has not moved for each category in step S5056, the measurement time of the measuring machine position confirming jig 70 will be elongated if there are too many categories. In order to prevent such drawback, it is preferable to determine the number of categories and the number of measurement points of each category, roughly estimating that the number of measurement points for confirming the measuring machine position is equal to or smaller than 10 % of the number of measurement points in one category.

FIG. 15 is a view of one example of measurement flow for each category.

The measurement program compares the reference point 800 and the center coordinate of the tip ball 104 of the probe 10 at the current point of time, and notifies the measurement spot via the input/output unit 404 to the operator (step C101). The operation of notifying the measurement spot via the input/output unit 404 to the operator is called a "guide".

The means for notifying the measurement spot includes screen display, lamp display or sound. The output unit can be disposed on the three-dimensional measuring machine 20, or can be disposed independently as a portable or fixed output unit. The screen display is advantageous in that the guide to the measurement spot can be displayed via numerical values. The lamp display is advantageous in that it has superior visibility from distant locations. The sound output is advantageous in that operation can be continued without the operator having to look at the sound output area, and so it has superior operation efficiency. The distance from the measurement spot and the like can be indicated by changing the volume or frequency of the sound, or by changing the flashing interval or emission intensity of the lamp. For example, the distance to the measurement spot can be notified by raising the frequency if the measurement spot is close and lowering the frequency if the spot is far. Multiple states of output as described above can be adopted.

The measurement program receives the information transmitted from the probe 10 via the control unit 30 by having the operator press the measurement button 106 of the probe 10 following a guide (step C102), and records and saves the measurement coordinate (step C103). Now, the measurement coordinate being recorded and saved is the center coordinate of the tip ball 104 of the probe 10 computed by the coordinate calculation program 302 of the control unit 30 based on the information transmitted from the probe 10.

The measurement program determines whether the measurement coordinate measured and recorded by following the guide falls within the measurement permissible range (step C104). If the measurement coordinate does not fall within the measurement permissible range (No), the measurement program generates an output information indicating that it is out of the measurement permissible range (step C105), outputs the generated information (step C106), and ends the process.

If the measurement coordinate is within the measurement permissible range (Yes), the measurement program maps the measurement coordinate data with the reference point, and generates an output information that it is within the measurement permissible range (step C108).
Next, the measurement program reads necessary processing information from a processing information/report table 401c (FIG. 6) based on the cell address information included in the reference point information of the reference point table 401a (FIG. 6) (step C109).

Thereafter, the measurement program determines whether all the measurement points corresponding to the reference points constituting a pair, that is, whether all the measurement points necessary for the dimension extraction processing, has been measured, based on a pair symbol information included in the processing information/report table 401c (step C110).

When all the points have been measured (Yes), the measurement program executes a dimension extraction processing, and computes dimension error and other necessary data (step C111). Next, the measurement program generates a tolerance determination result based on the computed dimension error (step C112). The data being computed and generated in steps C111 and C112 are stored in the dimension extraction table 405b (FIG. 6).

Based on these results, the measurement program enters the above-mentioned dimension error and tolerance determination result at a predetermined position of format of the report table 405c (FIG. 6) based on the cell address information to generate necessary information for the report table 405c (step C113), outputs the generated information (step C106), and ends the process.

If all the points have not been measured (No), the measurement program generates information indicating that not all the output information within the measurement permissible range generated in step C108 and the necessary information are output (step C114), outputs the generated information (step C106), and ends the process.

After ending the process, as a result of determination of step S5055 of FIG. 13, if not all the measurement points within the category have been measured as a result of the determination of step S5055 (No), the procedure immediately returns to step C101, and the subsequent measurement and processes accompanying the measurement are repeated.

Output information on whether the measurement falls within the measurement permissible range, and output information regarding the tolerance determination result are output to the exterior from the output unit of the input/output unit 404 of the processing unit 40.

Now, the means for outputting the determination result includes, similar to the means for notifying the measurement spots, a screen display, a lamp display and a sound output. The screen display is advantageous in that the amount of deviation can be notified by a numerical value, in addition to the determination result. The advantages of lamp output and sound output are the same as the advantages described in the means for notifying the measurement spots described earlier. These means of output can be adopted in combination.

Further, the specification of the measurement spot can be facilitated if the measurement permissible range is set to a large range, but the error caused by deviation of the measurement spot may be increased. In contrast, the deviation of the measurement spot can be made small if the measurement permissible range is reduced, but the specification of measurement spot becomes difficult.

Now, in step C104, in determining whether the measurement coordinate data falls within the measurement permissible range, the measurement program can simultaneously determine whether the measurement is performed by the stylus registered in advance using the type ID information of the stylus stored in the stylus type table 401b (FIG. 6). By executing the stylus determination, it becomes possible to prevent an erroneous measurement caused by performing measurement using the wrong stylus.

As described, mapping is performed automatically by determining whether the measurement coordinate data falls within the measurement permissible range. Then, extraction of dimension and generation of display information are performed based on steps C108 through C113, and the generated display information is output in step C106. Thereby, the operator can immediately confirm the results.

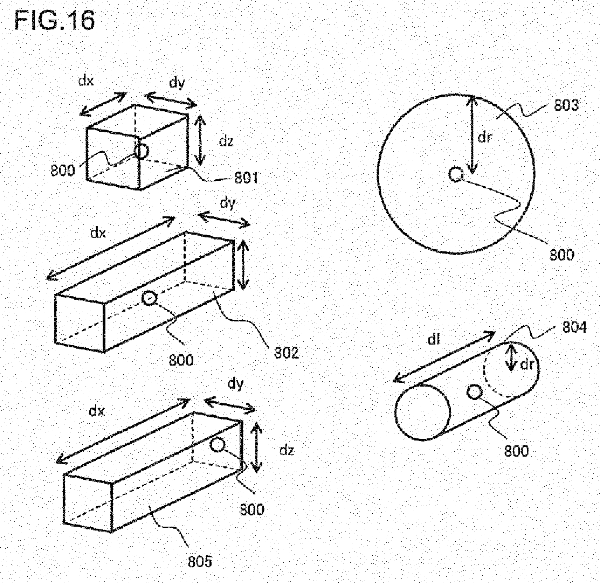

FIG. 16 is a view illustrating a specific example of a measurement permissible range of the reference point 800. The shape can be any arbitrary shape, such as a cube 801, a rectangular solid 802 (805), a ball 803 and a cylinder 804, as long as the area can be defined. Further, the reference point 800 can either be positioned at the center, or not at the center as in the case of a rectangular solid 805.

The body structure 50 adopts a shape referred to as a camber not reflected on the design drawings, curved in a direction of a rail. The camber of a vehicle body structure is designed so that the center position in an overall length of 25 m (25000 mm) is higher by approximately 15 mm than ends of the vehicle body. In consideration of the camber, even if a deviation of 100 mm occurs in the longitudinal direction, the height of the floor will only be varied for (100/12500) × 15 = 0.12 mm. Since the accuracy is sufficient for dimension measurement of the body structure 50, a rough estimate of the measurement permissible range should preferably be approximately 100 mm × 100 mm × 100 mm.

However, if there is a large measurement error due to the deviation of the measurement position, such as an R shape or where steps are formed, the error due to deviation of the measurement spot can be prevented through limitation. Further, erroneous measurement of steps and the like can be suppressed by displacing the reference point 800 from the center position. Furthermore, the center position of the reference point 800 can be varied in the height direction along the camber. In that case, measurement at a position close to the center of the measurement permissible range is enabled, so that the measurement permissible range in the height direction can be narrowed, and erroneous measurement can be prevented.

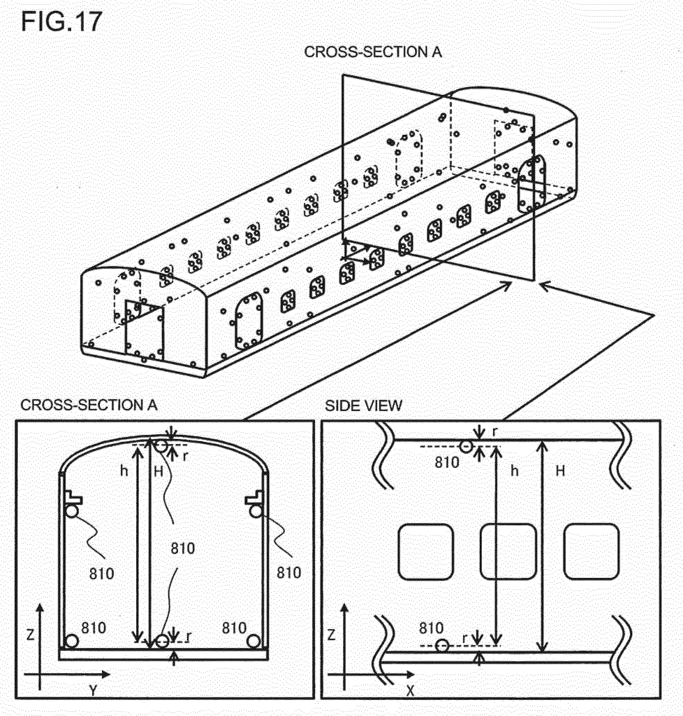

FIG. 17 is a view of a specific example of the dimension extraction processing.

Dimension extraction is performed based on the mathematical expression stored in the processing/report table 401c. Since coordinate transformation is performed in advance, the processing can be simplified by using only the necessary coordinate for the process among the measurement coordinates (XYZ coordinates) of the measurement point.

For example, the measurement of body structure height H in a cross-section A parallel to the YZ plane can be calculated by acquiring a difference h in the Z-axis direction of measurement points 810, and adding the stylus radius twice, in other words, by calculating H = h + r + r.

In the present example, the errors in the X and Y directions are ignored, but the measurement spot error can be reduced during measurement by setting the X and Y coordinates in an area where deformation in the Z direction is small within the measurement permissible range mentioned earlier.

The process of using only the coordinate necessary for the processing is the same as the process of performing projection on each of the XY, YZ and ZX planes, and therefore, dimension extraction processing can also be performed using a projected coordinate data.

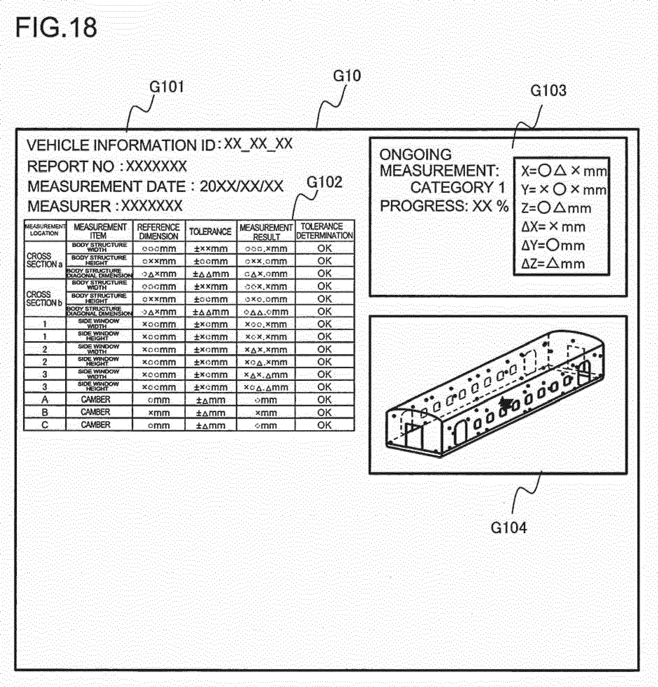

FIG. 18 is a view illustrating a screen display of measurement data and the like during measurement.

A screen display G10 includes a measurement condition display unit G101 displaying a vehicle information, a report number, a measurement date, a measurer and the like, a measurement result display unit G102 displaying dimension errors of measurement spots included in the currently measured category, a measurement indication unit G103 displaying a center coordinate of the tip ball 104 of the currently used probe 10, the error (ΔX, ΔY, ΔZ) between the center coordinate (X, Y, Z) of the tip ball 104 and the reference coordinate of the currently guiding reference point, the currently measured category, the measurement progress rate within the currently measured category, the pop-up of operation instructions and so on, and a three-dimensional display unit G104 displaying reference points and measurement points.

The operator confirms the result displayed on the measurement result display unit G102 and performs measurement according to the information of the three-dimensional display unit G104 and the measurement indication unit G103.

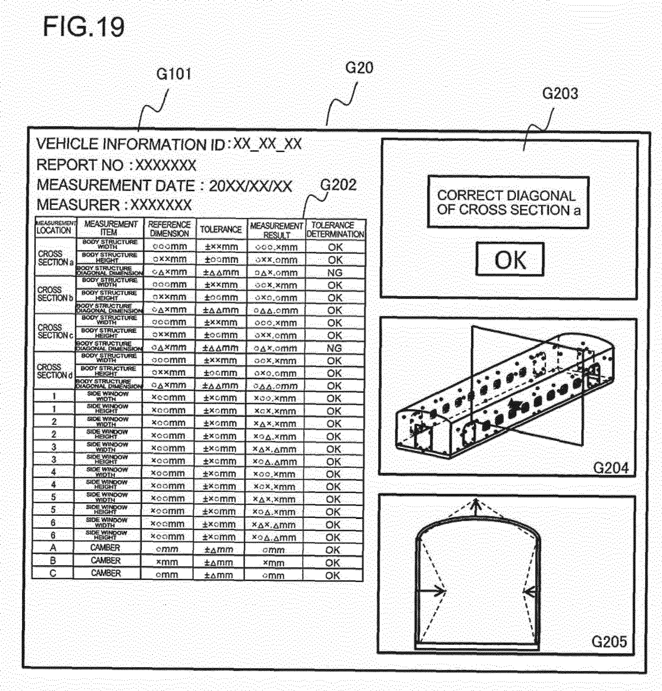

FIG. 19 is a view illustrating a screen display during end of measurement and during correction instruction.

A screen display G20 includes the measurement condition display unit G101 similar to FIG. 18, a measurement result display unit G202 displaying dimension errors of all measurement spots, a measurement indication unit G203 displaying pop-up of correction and other operation instructions, a three-dimensional display unit G204 displaying reference points and measurement points, and a two-dimensional display unit G205 displaying errors within a cross-sectional plane of the three-dimensional display or within a plane observed from one viewpoint.

The operator can confirm the measurement results through the measurement result display unit G202, the three-dimensional display unit G204 and the two-dimensional display unit G205. The error displayed on the two-dimensional display unit G205 can be represented using an arrow or color information exaggerating the error, so that the correction portion and the correction quantity can be recognized visually compared to the numerical value display of the measurement result display unit G202, and the influence on other portions can be examined more easily.

### <Second Embodiment>

A second embodiment is an embodiment that enables manufacture of the railway vehicle body structure based on the measurement using the three-dimensional measuring machine and the result of measurement, even when an unexpected situation such as generation of an item that cannot be measured occurs during measurement, or when there is an error in the design information or the registered information.

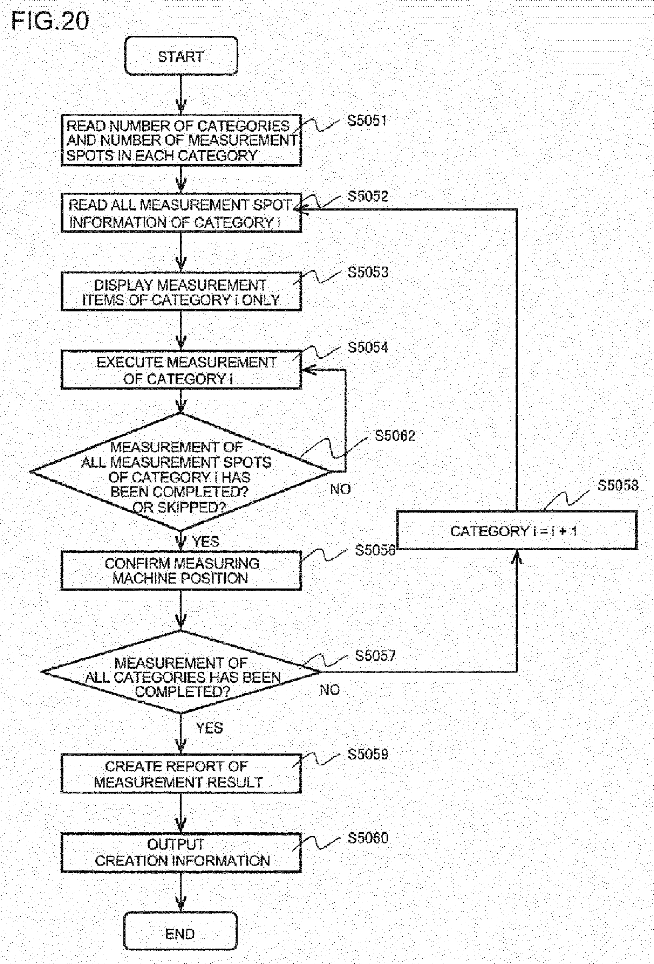

FIG. 20 is a view illustrating an example of a flow of the main measurement according to the second embodiment (step S505 of FIG. 13 according to the first embodiment).

A skip button is newly allocated as a button other than the measurement button 106 of the probe 10 of FIG. 2, and a signal output when the skip button is pressed (hereinafter referred to as "skip signal") is stored as information. A determination on whether skip has occurred (determination of whether there is a skip signal) is added to the determination on whether measurement of all measurement spots have been completed for category i performed in step S5055 of FIG. 13, as a step S5062 in replacement of step S5055. The steps other than the step S5062 are the same as the flow of the main measurement illustrated in FIG. 13 of the first embodiment.

Conditions that trigger pressing of the skip button include, for example, occurrence of an incident making it impossible to perform measurement during execution of the measurement (such as lack of a component or existence of an unnecessary component), so that the planned measurement item must be skipped and re-measurement must be performed later, or when it is established that there is an error in design information or registered information of a specific category either immediately before measurement or during measurement, so that the measurement of the category must be skipped and re-measurement must be performed later.

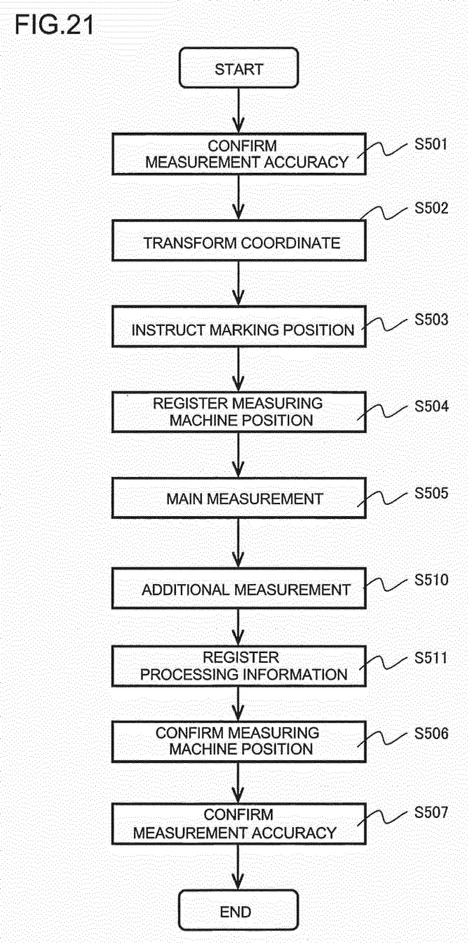

FIG. 21 is a view of an example of a detailed flow of measurement operation according to the second embodiment.

The second embodiment is also based on the detailed flow of the measurement operation illustrated in FIG. 8 related to the first embodiment. The flow of the measurement operation according to the second embodiment adds, in succession to the main measurement (step S505) of FIG. 8, a step (step S510) of adding and measuring a measurement point corresponding to the skipped reference point, and a step (step S511) of registering the processing information of the added and measured measurement point, before performing position confirmation of the measuring machine.

These added steps enable the dimension measurement to be completed within the flow of the series of measurement operation even when an unexpected situation occurs during measurement, such as the occurrence of an item that cannot be measured, or when there is an error in the design information or the registered information.

The present invention is not restricted to the above-illustrated preferred embodiments, and can include various modifications. The above-illustrated embodiments are described in detail to help understand the present invention, and the present invention is not necessarily restricted to a structure including all the components illustrated above. Further, a portion of the configuration of an embodiment can be replaced with the configuration of another embodiment, or the configuration of a certain embodiment can be added to the configuration of another embodiment. Moreover, a portion of the configuration of each embodiment can be added to, deleted from or replaced with other configurations.

A portion or whole of the above-illustrated configurations, functions, processing units, processing means and so on can be realized via hardware configuration such as by designing an integrated circuit. Further, the configurations and functions illustrated above can be realized via software by the processor interpreting and executing programs realizing the respective functions. The information such as the programs, tables and files for realizing the respective functions can be stored in a storage device such as a memory, a hard disk or an SSD (Solid State Drive), or in a memory media such as an IC card, an SD card or a DVD.

Only the control lines and information lines considered necessary for description are illustrated in the drawings, and not necessarily all the control lines and information lines required for production are illustrated. In actual application, it can be considered that almost all the components are mutually coupled.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A measurement apparatus at least comprising:
a probe (10) comprising a stylus (105) with a ball (104) disposed at a tip of the stylus (105), wherein the probe is configured to contact with a measurement spot;
a three-dimensional measuring machine (20) measuring coordinates of the ball (104) of the probe; and
a processing unit comprising a data table,
wherein the processing unit is adapted to perform the following:
stores data related to a reference point provided on a railway vehicle in the data table, wherein reference points where measurement permissible ranges interfere, by having the measurement permissible range overlapped, among a plurality of measurement spots are categorized into different categories, wherein the categories are divided per characteristic property of a specific portion of the railway vehicle, and wherein the categories are determined for each characteristic property of the measurement spot, and
performs mapping of three-dimensional measured coordinates and three-dimensional reference coordinates of each measurement, and performs dimension calculation of the railway vehicle, based on a coordinate error between the three-dimensional reference coordinates of the reference point and the three-dimensional measured coordinates obtained by measuring the railway vehicle using the probe (10) and the three-dimensional measuring machine.

2. The measurement apparatus according to claim 1, wherein
the processing unit comprises
storing a measurement permissible range information of a periphery of the three-dimensional reference coordinates of the reference point in the data table, and
determining whether the three-dimensional measured coordinates are within the measurement permissible range, and if it is within the measurement permissible range, adopts the three-dimensional measured coordinates, but if it is out of the measurement permissible range, does not adopt the three-dimensional measured coordinates.

3. The measurement apparatus according to claim 1 or 2, wherein
the processing unit confirms, during measurement and after completing the measurement, an initial position of the three-dimensional measuring machine (20) registered at a time the measurement is started, and determines whether a position of the three-dimensional measuring machine (20) has changed.

4. The measurement apparatus according to claim 3, wherein
the processing unit registers the initial position and confirms the initial position based on a position measurement result of a measuring machine position confirming jig obtained by setting the ball (104) of the probe (10) to the measuring machine position confirmation jig arranged at one or more spots within a measurement target range.

5. The measurement apparatus according to at least one of the claims 2 to 4, wherein
the processing unit confirms a measurement accuracy of the three-dimensional measuring machine before starting and after completing the measurement.

6. The measurement apparatus according to claim 5, wherein
the processing unit confirms the measurement accuracy based on a measurement result of position or length of an accuracy confirming jig obtained by setting the ball (104) of the probe to the accuracy confirming jig arranged at one or more spots within the measurement target range.

7. The measurement apparatus according to claim 5, wherein
the probe comprises an operation unit generating a skip signal of skipping a measurement spot, and
in a case where the skip signal is received from the operation unit, the processing unit performs the mapping and the dimension calculation regarding three-dimensional measured coordinates obtained by additionally measuring the skipped measurement spot after completing the measurement and before confirming the measurement accuracy of the three-dimensional measuring machine (20).

8. A measurement method at least utilizing
a probe comprising a stylus (105) with a ball (104) disposed at a tip of the stylus (105), wherein the probe is configured to contact a measurement spot, and
a three-dimensional measuring machine (20) measuring coordinates of the ball (104) of the probe, the method comprising:
acquiring three-dimensional measured coordinates by performing measurement of a railway vehicle at a reference point provided on the railway vehicle using the probe and the three-dimensional measuring machine (20), wherein reference points where measurement permissible ranges interfere, by having the measurement permissible range overlapped, among a plurality of measurement spots are categorized into different categories, wherein the categories are divided per characteristic property of a specific portion of the railway vehicle, and wherein the categories are determined for each characteristic property of the measurement spot;
computing a coordinate error between three-dimensional reference coordinates with respect to a reference point provided on the railway vehicle and the three-dimensional measured coordinates; and
mapping the three-dimensional measured coordinates and the three-dimensional reference coordinates of each measurement and performing dimensional calculation of the railway vehicle based on the coordinate error.

9. The measurement method according to claim 8, comprising:
setting a measurement permissible range information of a periphery of the three-dimensional reference coordinates of the reference point; and
determining whether the three-dimensional measured coordinates are within the measurement permissible range, and if it is within the measurement permissible range, adopts the three-dimensional measured coordinates, but if it is out of the measurement permissible range, does not adopt the three-dimensional measured coordinates.

10. The measurement method according to claim 9, wherein
in a case where the coordinates are not adopted, the method corrects the railway vehicle and executes the measurement again.

11. The measurement method according to claim 8, further comprising registering an initial position of the three-dimensional measuring machine (20) at a time the measurement is started, confirms the registered initial position during measurement and after completing measurement, and determining whether a position of the three-dimensional measuring machine (20) has changed.

12. The measurement method according to claim 8 or 11, further comprising confirming a measurement accuracy of the three-dimensional measuring machine (20) before starting and after completing the measurement.

13. The measurement method according to claim 12, further comprising:
enabling to perform a skip operation of a measurement spot during measurement; and
after completing the measurement and before confirming the measurement accuracy of the three-dimensional measuring machine (20), adding and measuring the measurement spot subjected to the skip operation, and performing mapping and the dimension calculation regarding the added measurement spot.

14. The method according to at least one of the claims 8 -13, further comprising
a manufacturing step of determining whether to change a manufacture condition of the railway vehicle based on the result of the three-dimensional measured coordinates and the dimension calculation, and manufacturing the railway vehicle based on the manufacture condition having performed necessary changes according to the determination.

## Patentansprüche

1. Messvorrichtung, die zumindest Folgendes umfasst:
eine Sonde (10), die einen Eingabestift (105) mit einer Kugel (104), die bei einer Spitze des Eingabestiftes (105) angeordnet ist, enthält, wobei die Sonde konfiguriert ist, mit einer Messstelle in Kontakt zu gelangen;
eine dreidimensionale Messmaschine (20), die Koordinaten der Kugel (104) der Sonde misst; und
eine Verarbeitungseinheit, die eine Datentabelle enthält,
wobei die Verarbeitungseinheit ausgelegt ist, Folgendes durchzuführen:
Speichern von Daten, die mit einem Referenzpunkt, der an einem Schienenfahrzeug vorgesehen ist, in Beziehung stehen, in der Datentabelle, wobei Referenzpunkte, an denen zulässige Messbereiche interferieren, indem die zulässigen Messbereiche überlappend gehalten werden, unter mehreren Messstellen in verschiedene Kategorien kategorisiert werden, wobei die Kategorien pro charakteristischer Eigenschaft eines bestimmten Abschnitts des Schienenfahrzeugs unterteilt sind und die Kategorien für jede charakteristische Eigenschaft der Messstelle bestimmt werden, und
Durchführen einer Abbildung von dreidimensionalen gemessenen Koordinaten und dreidimensionalen Bezugskoordinaten von jeder Messung und Durchführen einer Abmessungsberechnung des Schienenfahrzeugs auf der Grundlage eines Koordinatenfehlers zwischen den dreidimensionalen Bezugskoordinaten des Referenzpunktes und den dreidimensionalen gemessenen Koordinaten, die durch Messen des Schienenfahrzeugs unter Verwendung der Sonde (10) und der dreidimensionalen Messmaschine erhalten wurden.

2. Messvorrichtung nach Anspruch 1, wobei die Verarbeitungseinheit Folgendes enthält:
Speichern von zulässigen Messbereichsinformationen von einem Umkreis der dreidimensionalen Bezugskoordinaten des Referenzpunktes in der Datentabelle und
Bestimmen, ob die dreidimensionalen gemessenen Koordinaten im zulässigen Messbereich liegen, und dann, wenn sie im zulässigen Messbereich liegen, Annehmen der dreidimensionalen gemessenen Koordinaten, jedoch dann, wenn sie außerhalb des zulässigen Messbereichs liegen, nicht Annehmen der dreidimensionalen gemessenen Koordinaten.

3. Messvorrichtung nach Anspruch 1 oder 2, wobei
die Verarbeitungseinheit während der Messung und nach dem Abschließen der Messung eine anfängliche Position der dreidimensionalen Messmaschine (20), die zu der Zeit, zu der die Messmaschine gestartet wird, registriert wird, bestätigt und bestimmt, ob sich eine Position der dreidimensionalen Messmaschine (20) geändert hat.

4. Messvorrichtung nach Anspruch 3, wobei
die Verarbeitungseinheit die anfängliche Position registriert und die anfängliche Position auf der Grundlage eines Positionsmessergebnisses von einer Messmaschinenpositionsbestätigungs-Spannvorrichtung, das durch Setzen der Kugel (104) der Sonde (10) an die Messmaschinenpositionsbestätigungs-Spannvorrichtung, die an einem oder mehreren Orten in einem Zielmessbereich angeordnet ist, erhalten wird, bestätigt.

5. Messvorrichtung nach zumindest einem der Ansprüche 2 bis 4, wobei
die Verarbeitungseinheit eine Messgenauigkeit der dreidimensionalen Messmaschine vor dem Beginnen und nach dem Abschließen der Messung bestätigt.

6. Messvorrichtung nach Anspruch 5, wobei
die Verarbeitungseinheit die Messgenauigkeit auf der Grundlage eines Messergebnisses der Position oder der Länge einer Genauigkeitsbestätigungs-Spannvorrichtung, das durch Setzen der Kugel (104) der Sonde (10) an die Genauigkeitsbestätigungs-Spannvorrichtung, die an einem oder mehreren Orten in einem Zielmessbereich angeordnet ist, erhalten wird, bestätigt.

7. Messvorrichtung nach Anspruch 5, wobei
die Sonde eine Betätigungseinheit, die ein Auslasssignal beim Auslassen einer Messstelle erzeugt, enthält und
dann, wenn das Auslasssignal von der Betätigungseinheit empfangen wird, die Verarbeitungseinheit das Abbilden und die Abmessungsberechnung hinsichtlich dreidimensionaler gemessener Koordinaten, die durch zusätzliches Messen der ausgelassenen Messstelle nach dem Abschließen der Messung und vor dem Bestätigen der Messgenauigkeit der dreidimensionalen Messmaschine (20) erhalten wurden, durchführt.

8. Messverfahren, das zumindest Folgendes verwendet:
eine Sonde, die einen Eingabestift (105) mit einer Kugel (104), die bei einer Spitze des Eingabestiftes (105) angeordnet ist, enthält, wobei die Sonde konfiguriert ist, mit einem Messstelle in Kontakt zu gelangen; und
eine dreidimensionale Messmaschine (20), die Koordinaten der Kugel (104) der Sonde misst; wobei das Verfahren Folgendes umfasst:
Erfassen dreidimensionaler gemessener Koordinaten durch Durchführen einer Messung eines Schienenfahrzeugs bei einem Referenzpunkt, der am Schienenfahrzeug vorgesehen ist, unter Verwendung der Sonde und der dreidimensionalen Messmaschine (20), wobei Referenzpunkte, an denen zulässige Messbereiche interferieren, indem die zulässigen Messbereiche überlappend gehalten werden, unter mehreren Messstellen in verschiedene Kategorien kategorisiert werden, wobei die Kategorien pro charakteristischer Eigenschaft eines bestimmten Abschnitts des Schienenfahrzeugs unterteilt sind und die Kategorien für jede charakteristische Eigenschaft der Messstelle bestimmt werden;
Berechnen eines Koordinatenfehlers zwischen dreidimensionalen Bezugskoordinaten in Bezug auf einen Referenzpunkt, der am Schienenfahrzeug vorgesehen ist, und den dreidimensionalen gemessenen Koordinaten; und
Abbilden der dreidimensionalen gemessenen Koordinaten und der dreidimensionalen Bezugskoordinaten von jeder Messung und Durchführen einer Abmessungsberechnung des Schienenfahrzeugs auf der Grundlage des Koordinatenfehlers.

9. Messverfahren nach Anspruch 8, das Folgendes umfasst:
Festlegen von zulässigen Messbereichsinformationen von einem Umkreis der dreidimensionalen Bezugskoordinaten des Referenzpunktes und
Bestimmen, ob die dreidimensionalen gemessenen Koordinaten im zulässigen Messbereich liegen, und dann, wenn sie im zulässigen Messbereich liegen, Annehmen der dreidimensionalen gemessenen Koordinaten, jedoch dann, wenn sie außerhalb des zulässigen Messbereichs liegen, nicht Annehmen der dreidimensionalen gemessenen Koordinaten.

10. Messverfahren nach Anspruch 9, wobei
dann, wenn die Koordinaten nicht angenommen werden, das Verfahren das Schienenfahrzeug korrigiert und die Messung erneut ausführt.

11. Messverfahren nach Anspruch 8, das ferner Folgendes umfasst:
Registrieren einer anfänglichen Position der dreidimensionalen Messmaschine (20) zu der Zeit, zu der die Messmaschine gestartet wird, Bestätigen der registrierten anfänglichen Position während der Messung und nach dem Abschließen der Messung und Bestimmen, ob sich eine Position der dreidimensionalen Messmaschine (20) geändert hat.

12. Messverfahren nach Anspruch 8 oder 11, das ferner Folgendes umfasst:
Bestätigen einer Messgenauigkeit der dreidimensionalen Messmaschine (20) vor dem Beginnen und nach dem Abschließen der Messung.

13. Messverfahren nach Anspruch 12, das ferner Folgendes umfasst:
Aktivieren des Durchführens eines Auslassvorganges einer Messstelle während der Messung und
Hinzufügen und Messen der Messstelle, die dem Auslassvorgang unterworfen wurde, nach dem Abschließen der Messung und vor dem Bestätigen der Messgenauigkeit der dreidimensionalen Messmaschine (20) und Durchführen des Abbildens und der Abmessungsberechnung hinsichtlich der hinzugefügten Messstelle.

14. Messverfahren nach zumindest einem der Ansprüche 8-13, das ferner Folgendes umfasst:
einen Herstellungsschritt des Bestimmens, ob eine Herstellungsbedingung des Schienenfahrzeugs auf der Grundlage des Ergebnisses der dreidimensionalen gemessenen Koordinaten und der Abmessungsberechnung geändert werden soll, und Herstellen des Schienenfahrzeugs auf der Grundlage der Herstellungsbedingung, nachdem entsprechend der Bedingung notwendige Änderungen durchgeführt worden sind.

## Revendications

1. Appareil de mesure, comprenant au moins :
une sonde (10) comprenant un stylet (105) avec une bille (104) disposée au niveau d'une pointe du stylet (105), dans lequel la sonde est configurée pour venir en contact avec un emplacement de mesure ;
une machine de mesure tridimensionnelle (20) qui mesure des coordonnées de la bille (104) de la sonde ; et
une unité de traitement comprenant un tableau de données,
dans lequel l'unité de traitement est adaptée à effectuer les étapes suivantes consistant à :
stocker des données en relation à un point de référence prévu sur un véhicule ferroviaire dans le tableau de données, dans lequel des points de référence où des plages de mesure permissibles sont en interférence, du fait que les plages de mesure permissibles sont en chevauchement, parmi une pluralité d'emplacements de mesure, sont catégorisés dans des catégories différentes, dans lequel les catégories sont divisées par propriétés caractéristiques d'une portion spécifique du véhicule ferroviaire, et dans lequel les catégories sont déterminées pour chaque propriété caractéristique de l'emplacement de mesure, et
cartographier les coordonnées mesurées tridimensionnelles et des coordonnées de référence tridimensionnelles de chaque mesure, et effectuer un calcul dimensionnel du véhicule ferroviaire, sur la base d'une erreur de coordonnées entre les coordonnées de référence tridimensionnelles du point de référence et les coordonnées tridimensionnelles mesurées obtenues par mesure du véhicule ferroviaire en utilisant la sonde (10) et la machine de mesure tridimensionnelle.

2. Appareil de mesure selon la revendication 1, dans lequel l'unité de traitement comprend des moyens pour :
stocker une information de plage de mesure permissible d'une périphérie des coordonnées de référence tridimensionnelles du point de référence dans le tableau de données, et
déterminer si les coordonnées tridimensionnelles mesurées tombent dans la plage de mesure permissible et, si elles tombent dans la plage de mesure permissible, adopter les coordonnées tridimensionnelles mesurées mais, si elles tombent hors de la plage de mesure permissible, ne pas adopter les coordonnées tridimensionnelles mesurées.

3. Appareil de mesure selon la revendication 1 ou 2, dans lequel l'unité de traitement confirme, pendant la mesure et après avoir terminé la mesure, une position initiale de la machine de mesure tridimensionnelle (20) enregistrée au moment du démarrage de la mesure, et détermine si une position de la machine de mesure tridimensionnelle (20) a changé.

4. Appareil de mesure selon la revendication 3, dans lequel l'unité de traitement enregistre la position initiale et confirme la position initiale sur la base d'un résultat de mesure de position d'un gabarit de confirmation de position pour la machine de mesure obtenue en plaçant la bille (104) de la sonde (10) sur le gabarit de confirmation de position pour la machine de mesure, agencé à un ou plusieurs emplacements à l'intérieur d'une plage cible de mesure.

5. Appareil de mesure selon l'une au moins des revendications 2 à 4, dans lequel
l'unité de traitement confirme une précision de mesure de la machine de mesure tridimensionnelle avant de commencer et après avoir terminé la mesure.

6. Appareil de mesure selon la revendication 5, dans lequel l'unité de traitement confirme la précision de mesure sur la base d'un résultat de mesure de position ou de longueur d'un gabarit de confirmation de précision obtenue en plaçant la bille (104) de la sonde sur le gabarit de confirmation de précision agencée à un ou plusieurs emplacements à l'intérieur de la plage de mesure cible.

7. Appareil de mesure selon la revendication 5, dans lequel la sonde comprend une unité opérationnelle générant un signal de saut pour sauter un emplacement de mesure, et
dans un cas où le signal de saut est reçu depuis l'unité opérationnelle, l'unité de traitement effectue la cartographie et le calcul dimensionnel à l'égard des coordonnées tridimensionnelles mesurées obtenues en mesurant additionnellement l'emplacement de mesure sauté après avoir terminé la mesure et avant de confirmer la précision de mesure de la machine de mesure tridimensionnelle (20).

8. Procédé de mesure utilisant au moins
une sonde comprenant un stylet (100) avec une bille (104) disposée au niveau de la pointe du stylet (100), dans lequel la sonde est configurée pour venir en contact avec un emplacement de mesure, et
une machine de mesure tridimensionnelle (20) qui mesure les coordonnées de la bille (104) de la sonde, le procédé comprenant les étapes consistant à :
acquérir les coordonnées tridimensionnelles mesurées en effectuant une mesure sur un véhicule ferroviaire à un point de référence prévu sur le véhicule ferroviaire en utilisant la sonde et la machine de mesure tridimensionnelle (20), dans lequel des points de référence où les plages de mesure permissibles sont en interférence, du fait que les plages de mesure permissibles se chevauchent, parmi une pluralité d'emplacements de mesure sont catégorisés dans des catégories différentes, dans lequel les catégories sont divisées par propriété caractéristique d'une portion spécifique du véhicule ferroviaire, et dans lequel les catégories sont déterminées pour chaque propriété caractéristique de l'emplacement de mesure ;
calculer une erreur de coordonnées entre les coordonnées de référence tridimensionnelles à l'égard d'un point de référence prévu sur le véhicule ferroviaire et les coordonnées tridimensionnelles mesurées ; et
cartographier les coordonnées tridimensionnelles mesurées et les coordonnées de référence tridimensionnelles de chaque mesure et effectuer un calcul dimensionnel du véhicule ferroviaire sur la base de l'erreur de coordonnées.

9. Procédé de mesure selon la revendication 8, comprenant les étapes consistant à :
fixer une information de plage de mesure permissible d'une périphérie des coordonnées de référence tridimensionnelles du point de référence ; et
déterminer si les coordonnées tridimensionnelles mesurées tombent dans la plage de mesure permissible et, si elles tombent dans la plage de mesure permissible, adopter les coordonnées tridimensionnelles mesurées mais, si elles tombent hors de la plage de mesure permissible, ne pas adopter les coordonnées tridimensionnelles mesurées.

10. Procédé de mesure selon la revendication 9, dans lequel dans un cas où les coordonnées ne sont pas adoptées, le procédé corrige le véhicule ferroviaire et exécute à nouveau la mesure.

11. Procédé de mesure selon la revendication 8, comprenant en outre les étapes consistant à :
enregistrer une position initiale de la machine mesure tridimensionnelle (20) au moment où la mesure est démarrée,
confirmer la position enregistrée initiale pendant la mesure et après avoir terminé la mesure, et
déterminer si une position de la machine de mesure tridimensionnelle (20) a changé.

12. Procédé de mesure selon la revendication 8 ou 11, comprenant en outre l'étape consistant à
confirmer une précision de mesure de la machine mesure tridimensionnelle (20) avant de commencer ou après avoir terminé la mesure.

13. Procédé de mesure selon la revendication 12, comprenant en outre les étapes consistant à :
activer l'exécution d'une opération de saut d'un emplacement de mesure pendant la mesure ; et
après avoir terminé la mesure et avant de confirmer la précision de mesure de la machine de mesure tridimensionnelle (20), ajouter et mesurer l'emplacement de mesure soumis à l'opération de saut, et exécuter la cartographie et le calcul dimensionnel à l'égard de l'emplacement de mesure ajouté.

14. Procédé selon l'une au moins des revendications 8 à 13, comprenant en outre
une étape de fabrication consistant à déterminer s'il s'agit de changer une condition de fabrication du véhicule ferroviaire sur la base du résultat des coordonnées tridimensionnelles mesurées et du calcul dimensionnel, et dans lequel la fabrication du véhicule ferroviaire est basée sur une condition de fabrication dans laquelle des changements nécessaires sont effectués en accord avec la détermination.
